# EUROPÄISCHE PATENTANMELDUNG

(11) **EP 2 312 292 A1**
(43) Veröffentlichungstag der Anmeldung: **20.04.2011**
(21) Anmeldenummer: 09013056.8
(22) Anmeldetag: 15.10.2009
(51) Int. Cl.: G01N 3/00, B23K 31/12

(54) **Material für Zug- und HCF-Versuche für die Prüfung von Auftragsschweissungen und Verfahren**

(71) Anmelder: Siemens Aktiengesellschaft, 80333 München (DE)
(72) Erfinder: Costamagna, Raoul Dr., 45479 Mülheim an der Ruhr (DE); Grüger, Birgit, 44329 Dortmund (DE); Rollmann, Michael, 45147 Essen (DE); Skoczowsky, Joachim, 16767 Leegebruch (DE)

(57) **Zusammenfassung**

Proben für Zug- oder HCF-Versuche zur Ermittlung von Materialeigenschaften, wobei die Probe (1) nicht nur eine Schweißung, sondern zwei Schweißungen (4',4'') gegenüberliegend auf der Probe (1) angeordnet sind.

## Beschreibung

Die Erfindung betrifft eine spezielle Probengeometrie für Zug- und/oder HCF-Versuche zur Überprüfung von Schweißungen.

Bauteile werden oft miteinander verschweißt oder es finden Auftragsschweißungen statt. Für den späteren Einsatz muss zur Qualitätskontrolle überprüft werden, ob die mechanischen Bedingungen des geschweißten Bauteils den Anforderungen genügt.

In der US 2006/0236765 A1 ist eine Probengeometrie beschrieben, bei der ein Mittelteil der Probe vollständig von der Schweißung gebildet wird.

In der US 4,409,462 ist eine Verbindungsschweißung zur Probengeometrie bekannt.

In der US 7,448,280 B2 ist eine Probengeometrie beschrieben, bei dem bei einem mittleren Bereich der Querschnitt von einem geschweißten Bereich und von einem Substratmaterial gebildet ist.

Es ist Aufgabe der Erfindung, die Probengeometrie zu verbessern, um wirklichkeitsnahe Festigkeitswerte bestimmen zu können.

Die Aufgabe wird gelöst durch eine Probengeometrie gemäß Anspruch 1.

In den Unteransprüchen sind weitere vorteilhafte Maßnahmen aufgelistet, die beliebig miteinander kombiniert werden können, um weitere Vorteile zu erzielen.

Bei Auftragsschweißungen stellt das schwächste Glied in dieser Parallelschaltung von vorhandenem Substratmaterial und aufgeschweißtem Material in der Regel das Schweißmaterial dar.

So kann, wenn ein mittlerer Bereich einer Probengeometrie wie in der US 2006/0236765 A1 oder in der US 4,409,462 ein mittlerer Bereich nur von Schweißmaterial gebildet wird, nicht die Festigkeitswerte von Bereichen, in denen eine Auftragsschweißung vorhanden ist, abbilden.

Es zeigen:
- Figur 1: zwei schematische Darstellungen einer neuen Probengeometrie,
- Figur 2: Teil einer Probengeometrie.
- Figur 3, 4: eine Aufsicht auf die Probe,

Die Beschreibung und die Figuren stellen nur Ausführungsbeispiele der Erfindung dar.

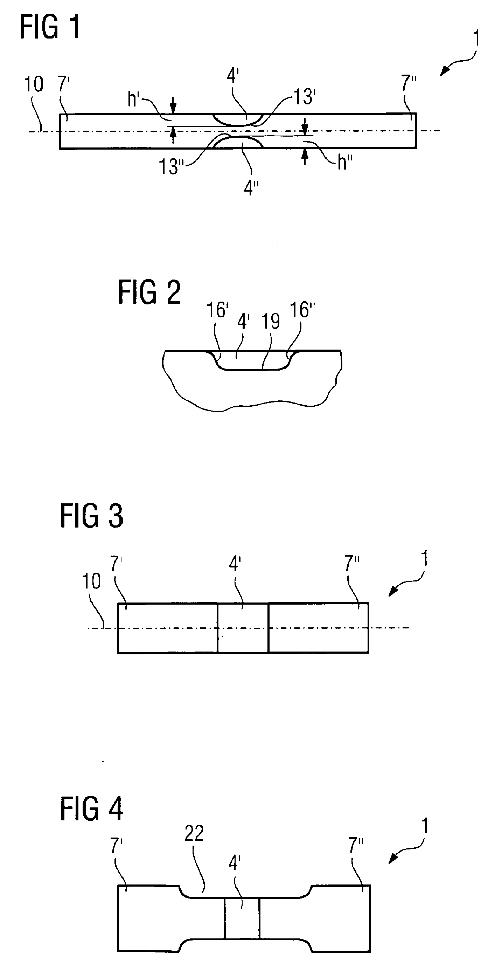

In Figur 1 ist eine Seitenansicht einer Probe 1 dargestellt. Die Probe 1 wird an den Enden 7', 7" eingespannt (nicht dargestellt) und mit einer Kraft F beaufschlagt, die parallel zu einer Längsachse 10 der Probe 1 verläuft. Die Probengeometrie ist im Wesentlichen eine Flachprobe, also quaderförmig, insbesondere im Querschnitt rechteckförmig. Dies sind vorzugsweise 120mm - 150 mm Länge, 6mm - 10mm Dicke und 10mm - 20mm Breite (Fig. 3, 4). Der Querschnitt der Probe 1 weist längs der Längsachse 10 ein hohes Aspektverhältnis auf.

In der Mitte der Probe 1 sind Schweißungen 4', 4" auf beiden Oberflächen der Probe 1 vorhanden.

Längs der Krafteinwirkung F gibt es vorzugsweise Vertiefungen 13', 13" auf beiden Seiten der Probe 1, in denen die Schweißungen 4', 4" vorhanden sind. Die Schweißungen 4', 4" sowie Vertiefungen 13, 13' liegen sich vorzugsweise spiegelsymmetrisch gegenüber. Die maximale Tiefe h', h" der Schweißung 4', 4" ist vorzugsweise auf beiden Seiten gleich groß. Vorzugsweise beträgt sie 1mm - 2mm. Die Schweißungen 4', 4" berühren sich aber nicht.

Ebenso vorzugsweise ist der Querschnitt der Schweißung 4', 4" gleich groß längs der Längsachse 10, wobei der Verlauf der Verjüngungen 13', 13" beliebig ausgebildet sein kann. In diesem Ausführungsbeispiel in Figur 1 ist er oval dargestellt, er kann aber auch seitlich abgerundete Flanken 16', 16" aufweisen und einen mittleren Bereich 19, der gradlinig verläuft (Fig. 2). Weitere Verläufe wie ohne geradlinigen Verlauf in der Mitte 19 sind denkbar.

Figur 3 zeigt eine Aufsicht auf eine Probe 1 gemäß Figur 1. Die Schweißung 4', 4" erstreckt sich über die gesamte Breite der Probe 1.

Die Probe 1 kann auch in der Mitte eine Verjüngung 22 (Fig. 4) aufweisen, innerhalb der die Schweißungen 4', 4" bzw. die Vertiefungen 13', 13" angeordnet sind.

Solche Probengeometrien können für Zug-, High-Cycle Fatigue (HCF)-Versuche aber auch für Low-Cycle-Fatigue (LCF) und weitere Untersuchungsverfahren verwendet werden. Insbesondere eignen sich also solche Probengeometrien für Bauteile, die beidseitig geschweißt werden.

## Patentansprüche

1. Materialprobe (1) für Zug- oder HCF-Versuche zur Ermittlung von Materialeigenschaften,
wobei die Materialprobe (1) zwei gegenüberliegende Schweißungen (4', 4") aufweist.

2. Probe (1) nach Anspruch 1,
wobei die Schweißungen (4', 4") symmetrisch zu einer Ebene oder spiegelsymmetrisch zu einer Längsachse (10) der Probe (1),
die (10) parallel zur späteren Krafteinwirkung (F) verläuft,
angeordnet sind.

3. Probe (1) nach Anspruch 1 oder 2,
bei der die Schweißungen (4', 4") in Vertiefungen (13', 13") angeordnet sind.

4. Probe (1) nach Anspruch 1, 2 oder 3,
wobei die Kontur der Schweißungen (4', 4") längs zur Krafteinwirkung (F) gekrümmte Flanken (16', 16") und/oder einen gradlinigen Verlauf (19) aufweist.

5. Probe (1) nach Anspruch 1, 2, 3 oder 4,
die (1) im Querschnitt, insbesondere senkrecht zur Längsachse (10) im Wesentlichen rechteckförmig ausgebildet ist.

6. Probe (1) nach Anspruch 1, 2, 3, 4 oder 5,
bei der die Schweißungen (4', 4") sich nicht berühren.

7. Probe nach Anspruch 1, 2, 3, 4, 5 oder 6,
bei der die Schweißungen (4', 4") in einem Bereich (22) angeordnet sind,
der gegenüber dem Ende (7'. 7") in der Breite verjüngt ist.

8. Verfahren zur Ermittlung von Materialeigenschaften, bei dem eine Probe (1) gemäß Anspruch 1, 2, 3, 4, 5, 6 oder 7 verwendet wird.

9. Verfahren nach Anspruch 8,
das bei Zug-, HLT- oder LCF-Versuchen angewendet wird.

## Geänderte Patentansprüche

### Geänderte Patentansprüche gemäss Regel 137(2) EPÜ.

**1.** Materialprobe (1) für Zug- oder HCF-Versuche zur Ermittlung von Materialeigenschaften,
wobei die Materialprobe (1) zwei gegenüberliegende Schweißungen (4', 4") aufweist,
bei der die Schweißungen (4', 4") sich nicht berühren.

**2.** Probe (1) nach Anspruch 1,
wobei die Schweißungen (4', 4") symmetrisch zu einer Ebene oder spiegelsymmetrisch zu einer Längsachse (10) der Probe (1),
die (10) parallel zur späteren Krafteinwirkung (F) verläuft,
angeordnet sind.

**3.** Probe (1) nach Anspruch 1 oder 2,
bei der die Schweißungen (4', 4") in Vertiefungen (13', 13") angeordnet sind.

**4.** Probe (1) nach Anspruch 1, 2 oder 3,
wobei die Kontur der Schweißungen (4', 4") längs zur Krafteinwirkung (F) gekrümmte Flanken (16', 16") und/oder einen gradlinigen Verlauf (19) aufweist.

**5.** Probe (1) nach Anspruch 1, 2, 3 oder 4,
die (1) im Querschnitt, insbesondere senkrecht zur Längsachse (10) im Wesentlichen rechteckförmig ausgebildet ist.

**6.** Probe nach Anspruch 1, 2, 3, 4 oder 5,
bei der die Schweißungen (4', 4") in einem Bereich (22) angeordnet sind,
der gegenüber dem Ende (7', 7") in der Breite verjüngt ist.

**7.** Verfahren zur Ermittlung von Materialeigenschaften, bei dem eine Probe (1) gemäß Anspruch 1, 2, 3, 4, 5 oder 6 verwendet wird.

**8.** Verfahren nach Anspruch 7,
das bei Zug-, HLT- oder LCF-Versuchen angewendet wird.
